# EUROPÄISCHE PATENTSCHRIFT

(11) **EP 1 251 028 B1**
(45) Veröffentlichungstag und Bekanntmachung des Hinweises auf die Patenterteilung: **14.06.2006**
(21) Anmeldenummer: 02008305.1
(22) Anmeldetag: 11.04.2002
(51) Int. Cl.: B60N 2/28, A47D 13/02

(54) **Kindersitz, insbesondere Autokindersitz, für Babys und Kleinstkinder**
Child seat, especially car child seat for babies and infants
Siège d'enfant, en particulier siège pour nourissons ou enfants en bas âge pour automobile

(30) Priorität: 12.04.2001 DE 10118411; 05.10.2001 DE 10149091
(43) Veröffentlichungstag der Anmeldung: 23.10.2002
(73) Patentinhaber: FEYLER, BEATRICE, 96242 SONNENFELD (DE)
(72) Erfinder: FEYLER, BEATRICE, 96242 SONNENFELD (DE)
(74) Vertreter: Schultz-Süchting, Rolf

(56) Entgegenhaltungen:
- DE-U- 9 203 620
- US-A- 4 641 844
- US-A- 5 385 387
- US-A- 5 658 044
- US-A- 5 887 950
- US-A- 5 971 476

## Beschreibung

Die Erfindung betrifft einen Kindersitz nach dem Oberbegriff des Anspruches 1 (siehe z.B. US-A-5 971 476).

Autokindersitze, dieser Art sind in vielfältigen Ausführungen bekannt und auf dem Markt erhältlich. Im Zusammenhang mit den Bemühungen zur Erhöhung der passiven Sicherheit bei der Konstruktion von Autos ebenso wie von Zubehör sind derartige Autokindersitze seit Jahren Gegenstand ständiger Weiterentwicklung und haben einen hohen Sicherheits- und Zuverlässigkeitsstandard erreicht.

Es hat auch vielfältige Bemühungen gegeben, den Gebrauchswert von Auto- und auch Fahrradkindersitzen durch Zuordnung von Zusatzfunktionen zu erhöhen.

So wird in der US 4 641 844 ein zugleich als sogenannte Buggy einsetzbarer und zudem faltbarer Autokindersitz für Babys beschrieben. Ein ähnlich multifunktioneller Baby-Kindersitz, bei dem das Fahrgestell, welches den Einsatz als Buggy ermöglicht, in die auf der Unterseite entsprechend ausgeformte Sitzschale einziehbar ist, wird in der US 4 762 331 beschrieben. In der DE 42 43 826 A1 wird ein weiterer Autokindersitz beschrieben, der zudem - komplettiert durch ein entsprechendes Fahrgestell - als Kinderwagen nutzbar ist.

Hierbei ist an einen die Sitzschale tragenden Rohrrahmen ein stabförmiger, gekrümmter Griff einsteck- und verrastbar, mit dem der Kinderwagen geführt wird.

In der DE 94 05 574 U1 wird ein Fahrrad-Kindersitz beschrieben, bei dem ein in verschiedene Stellungen schwenkbarer, die Sitzschale umgreifender Metallbügel in Abhängigkeit von seiner jeweiligen Schwenkstellung als Sicherheitsbügel, Haltegriff und beim vom Fahrrad unabhängigen Fahren des Kindersitzes (als Buggy) oder als Tragegriff beim Tragen dient.

Schließlich ist aus der DE 92 03 620 U1 ein Kindersitz mit einem Sitzteil und einem Rückenteil und Seitenwänden oder Seitenrändern bekannt, an denen ein einschenkeliger oder doppelschenkliger Tragebügel angelenkt ist, der in verschiedene Positionen verschwingbar ist und mindestens zum Stützen des Kindersitzes auf oder gegen eine Tragfläche sowie in Trageposition arretierbar ist.

Die erwähnten Kindersitze sind teilweise aufwendig konstruiert, lassen sich aber trotz ihrer Mehrfach-Funktionalität allenfalls in ergonomisch höchst ungünstiger Weise - und daher mit hohem Kraftaufwand und schneller Erschöpfung des Benutzers - tragen.

Der in der o.g. US-A-5 971 476 offenbarte Feststellmechanismus enthält an der rechten wie der linken Seite des Tragebügels jeweils einen Teil des Feststellmechanismus und hierzu je eine separate Sperrklinke, so daß für ein Verstellen des Tragebügels beide Sperrklinken zugleich betätigt werden müssen; hierfür ist also eine Zweihandbefatigüng erforderlich.

Der Erfindung liegt daher die Aufgabe zugrunde, einen in ergonomisch vorteilhafter Weise und daher leicht tragbaren und zugleich einfach aufgebauten und daher leicht und kostengünstig herstellbaren Kindersitz der eingangs genannten Art anzugeben.

Diese Aufgabe wird durch einen Kindersitz gelöst, der durch die Merkmale des kennzeichnenden Teils des Anspruches 1 definiert ist.

Weiterbildungen der Erfindung sind in den abhängigen Ansprüchen angegehen.

Die Erfindung schließt den grundlegenden Gedanken ein, einen Kindersitz mit einem zentral angeordneten Haltegriff zu versehen, der in Trageposition des Tragebügels oberhalb der Sitzschale (und des darin im Gebrauchszustand liegenden Babys oder Kleinstkindes) angeordnet ist. Eine solche Anordnung ermöglicht ein leichtes Erreichen des Griffes in jeder Benutzungssituation und ein präzises Dirigieren des Sitzes auch unter beengten Platzverhältnissen mit geringem Kraftaufwand, da das Griffstück des Haltegriffs nahe der Schwerpunktlinie des Sitzes mit dem darin befindlichen Baby plaziert ist. Beim Tragen des Kindersitzes muß das Handgelenk des Benutzers nicht um 90° nach vorne oder nach hinten gedreht werden. Der Kindersitz kann also in anatomisch gerechter Weise vom Benutzer getragen und gehalten werden.

Der Haltegriff ist vorzugsweise etwa am Zenit des in der Regel etwa U-förmigen Tragebügels an diesen angesetzt und erstreckt sich in Tragestellung desselben entweder nach hinten oder vorzugsweise nach vorne, auf jeden Fall so, daß es sich etwa über dem Schwerpunkt von Liege-/Sitzschale samt Kind befindet. Vorzugsweise sind Tragebügel und Haltegriff einstückig ausgebildet.

Die Anlenkung des Tragebügels an der Liege-/Sitzschale, insbesondere an deren Seitenwänden, umfaßt erfindungsgemäß einen Feststellmechanismus mit Sperrschieber und zugeordneten Rastausnehmungen, so daß der Tragebügel samt Haltegriff entweder in aufrechter Tragestellung oder heruntergeklappter Transportstellung arretierbar ist. Grundsätzlich ist es auch denkbar, den Tragebügel über das kopfseitige Ende der Liege-/Sitzschale hinaus in eine Stützstellung zu verschwenken, in der sich der Tragebügel an einer ebenen Tragfläche bzw. am Boden abstützt, so wie dies in der DE 92 03 620 U1 vorgeschlagen ist.

Der oder die Sperrschieber sind erfindungsgemäß dem Tragebügel mit Haltegriff zugeordnet und mittels eines am Haltegriff vorstehenden Druckknopfes entgegen der Wirkung eines elastischen Elements, insbesondere Feder, aus einer Sperrstellung heraus in eine Freigabestellung bewegbar, in der dann der Tragebügel frei verschwenkbar ist. Die dem oder den Sperrschieber(n) zugeordneten Rastausnehmungen können bei einer weiter bevorzugten Ausführungsform am Außenumfang einer der Schwenkachse zugeordneten, ortsfest an der Liege-/Sitzschale montierten Scheibe ausgebildet sein.

Eine Weiterbildung der vorliegenden Erfindung besteht in einer bevorzugten Ausführung der Liege-/Sitzschale, die als einteilige Kunststoffschale ausgebildet sein kann und eine Hartschaumstoffeinlage (Styropor®-Einlage) aufnimmt, die als anatomische Liege-/Sitzunterlage dient. Diese Einlage läßt sich mit einem textilen Bezug oder einer Polsterauflage verbinden, wobei bei einer besonders einfachen und benutzerfreundlichen Ausführungsform der textile Bezug oder die textile Polsterauflage randseitig mit einem Gummizug versehen ist, mittels dem der Bezug oder die Polsterauflage, nachdem sie über den Rand der Hartschaumstoffeinlage gestülpt ist, an dieser gehalten wird. Die Hartschaumstoffeinlage samt Bezug oder Polsterauflage ist dann innerhalb der Kunststoffschale plazierbar. Bei Bedarf kann sie mühelos entfernt und der textile Bezug oder die Polsterauflage ausgewechselt werden. Der erwähnte Gummizug vermeidet ein aufwendiges Befestigen des textilen Bezuges oder der Polsterauflage mittels Ösen, Schlaufen, Druckknöpfe oder dergleichen. Die letztgenannte Sitzkonstruktion wird auch als gesonderte Erfindung beansprucht.

Ein weiterer Gesichtspunkt des beschriebenen Kindersitzes ist die Anordnung einer zentralen Gurtverstellung am Kopfende der Liege-/Sitzschale. Es gibt eine Vorschrift, nach der Kindersitze der hier fraglichen Art mit dem Kopfende nach vorne an einem Autositz plaziert werden müssen. Bei Anordnung der zentralen Gurtverstellung am Kopfende ist diese dann leicht zugänglich, insbesondere für die Anpassung der Gurtlänge an die Körpergröße des Babys oder Kleinstkindes, welches im Kindersitz der hier fraglichen Art plaziert wird. Die hier beanspruchte Gurtverstelleinrichtung ist Teil der dem Kindersitz zugeordneten Sicherheitsgurtsystem, welches in der Regel einen sogenannten Y-Gurt umfaßt. Die beiden Äste des Y-Gurtes erstrecken sich in der Regel über die Schulter des im Kindersitz plazierten Kindes, während der Steg des Gurtes sich in der Regel zwischen den beiden Beinen des Kindes erstreckt. Grundsätzlich ist es auch denkbar, einen sogenannten "Hosenträgergurt" vorzusehen. In all diesen Fällen soll jedoch die Gurtverstellung zentral und am Kopfende der Liege-/Sitzschale plaziert sein.

Eine Wieterbildung des erfindungsgemäßen Kindersitzes in Kombination mit den vorgenannten Merkmalen besteht darin, daß ein flexibles Regen- und/oder Sonnendach am Tragebügel einerseits und am kopfseitigen Rand der Liege-/Sitzschale andererseits befestigbar ist, insbesondere durch komplementäre Klettverschlußstreifen, Druckknöpfe, Bändchen oder dergleichen.

Vorzugsweise umfaßt der dem kopfseitigen Rand der Liege-/Sitzschale zugeordnete Rand des Regen- und/oder Sonnendachs einen Gummizug, mit dem letztgenannter Rand am zugeordneten Schalenrand festgehalten wird.

Zusätzlich kann vorgesehen sein, daß die fußseitige Hälfte des Kindersitzes durch eine wasserundurchlässige Folie oder dgl. abdeckbar ist. Diese Abdeckung besteht vorzugsweise aus demselben Material wie das erwähnte Regen- und/oder Sonnendach.

Nachstehend wird eine bevorzugte Ausführungsform eines erfindungsgemäßen Kindersitzes anhand der beigefügten Zeichnungen näher erläutert.

Es zeigen:
- Figur 1: einen erfindungsgemäß ausgebildeten Kindersitz in perspektivischer Seitenansicht;
- Figur 2: den Kindersitz nach Figur 1 in Vorderansicht;
- Figur 3: den Kindersitz nach den Figuren 1 und 2 unter Darstellung der Anbringung eines Regen-und/oder Sonnendachs sowie einer zusätzlichen Abdeckung der fußseitigen Hälfte des Kindersitzes, ebenfalls in perspektivischer Ansicht von schräg vorne oben;
- Figur 4: den Kindersitz in perspektivischer Ansicht von schräg vorne oben ohne Polsterung unter Darstellung einer Sicherheitsgurteinrichtung;
- Figur 5: den Kindersitz gemäß Figur 4 von schräg unten unter Darstellung der rückseitigen Ausbildung der Sicherheitsgurteinrichtung; und
- Figur 6: den Kindersitz gemäß den Figuren 4 und 5 in perspektivischer Ansicht von schräg vorne oben mit Polsterung und unter Darstellung der vorderseitigen Teile der Sicherheitsgurteinrichtung.

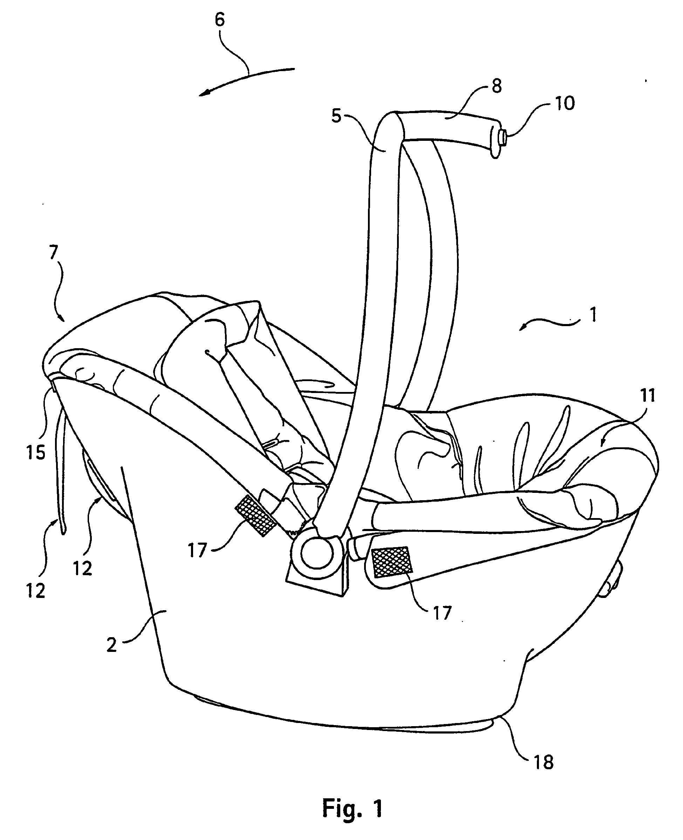

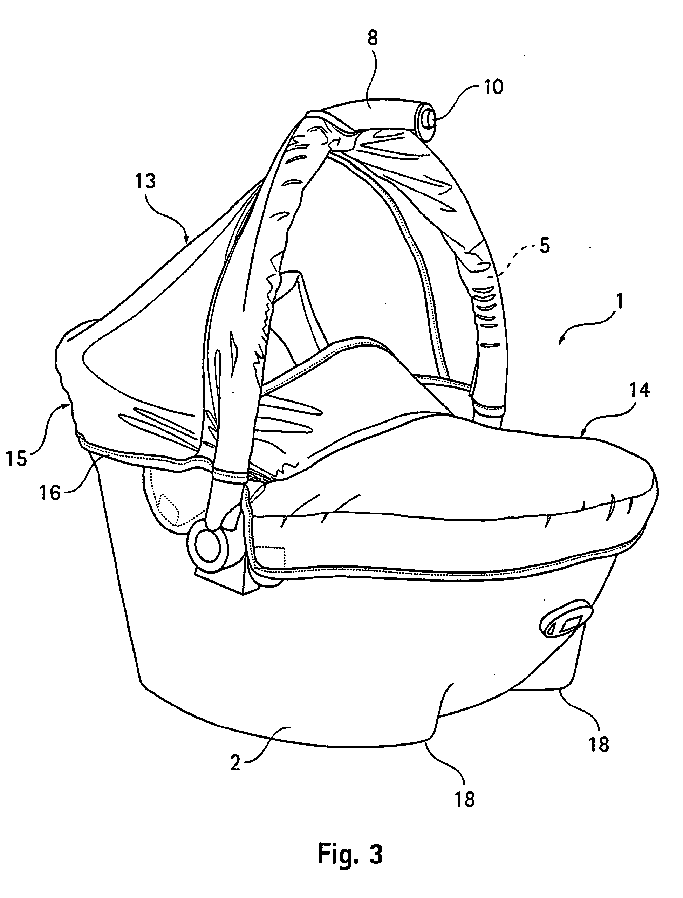

Der in den Figuren 1-3 dargestellte Kindersitz 1 umfaßt eine Liege-/Sitzschale 2, die einteilig aus Kunststoff hergestellt ist. An den beiden Seitenwänden 3 und 4 ist ein um eine sich quer und etwa horizontal erstreckende Achse verschwenkbarer Tragbügel 5 angelenkt. Dieser Tragbügel 5 kann aus einer in den Figuren 1 und 3 gut sichtbaren aufrechten Trageposition in eine Transportposition in Richtung des Pfeiles 6 auf das kopfseitige Ende 7 des Kindersitzes 1 heruntergeklappt werden. Transportposition des Kindersitzes bedeutet, daß dieser zum Beispiel auf einem Autositz plaziert und mittels der Auto-Sicherheitsgurte fixiert ist.

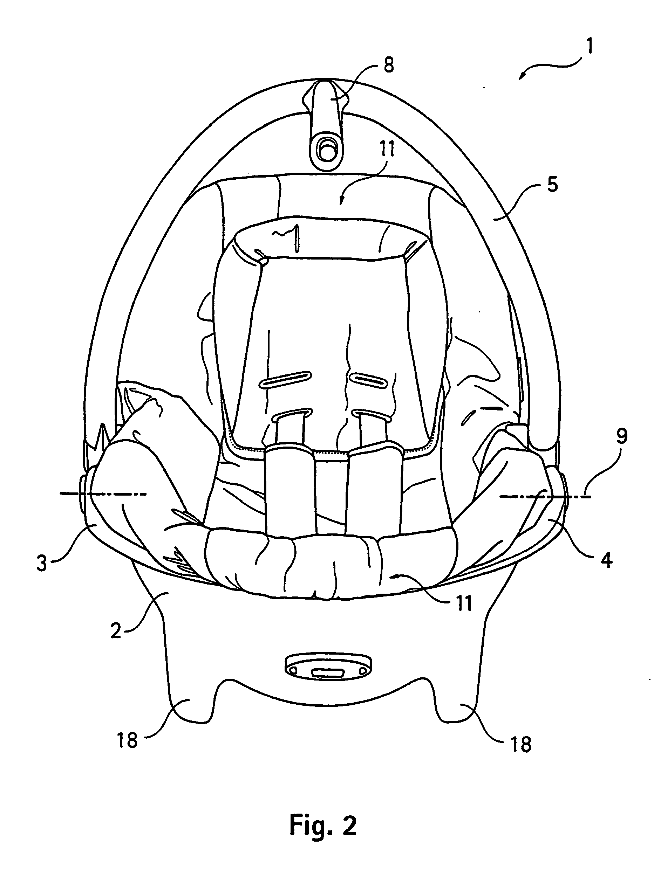

Der Tragebügel 5 umfaßt einen sich etwa senkrecht zu dessen Schwenkachse erstreckenden, und bei dem dargestellten Ausführungsbeispiel nach vorne ragenden Haltegriff 8. Die oben erwähnte Schwenkachse für den Tragebügel 5 ist in Figur 2 mit der Bezugsziffer 9 angedeutet.

Der Haltegriff 8 ist, wie Figur 2 vor allem erkennen läßt, im Zenit des Tragebügels 5 an diesen angesetzt. Er erstreckt sich, wie bereits erwähnt, nach vorne, so daß er sich etwa über dem Schwerpunkt von Liege-/Sitzschale 2 samt Baby oder Kind befindet. Die Anlenkung des Tragebügels 5 an den Seitenwänden 3 und 4 der Liege-/Sitzschale 2 umfaßt an wenigstens einer Seite einen Feststellmechanismus mit Sperrschieber und zugeordneten Rastausnehmungen, so daß der Tragebügel 5 entweder in der aufrechten Tragestellung gemäß Figur 2 oder der oben beschriebenen heruntergeklappten Transportstellung arretierbar ist. Der wenigstens eine Sperrschieber ist dem Tragebügel 5 mit Haltegriff 8 zugeordnet und mittels eines am vorderen Ende des Haltegriffs 8 vorstehenden Druckknopfes 10 entgegen der Wirkung eines nicht dargestellten elastischen Elements, insbesondere einer Feder aus einer Sperrstellung heraus in eine Freigabestellung bewegbar, in der dann der Tragebügel 5 frei verschwenkbar ist.

Die dem erwähnten Sperrschieber zugeordneten Rastausnehmungen können zum Beispiel am Außenumfang einer der Schwenkachse 9 zugeordneten, ortsfest an der Seitenwand 3 und/oder 4 der Liege-/Sitzschale 2 montierten Scheibe ausgebildet sein. Da es sich hierbei um eine an sich bekannte Mechanik handelt, wird im vorliegenden Fall auf eine nähere Darstellung derselben verzichtet.

Wie den Figuren 1-3 noch entnommen werden kann, ist die Liege-/Sitzschale 2 als einstückige Kunststoffschale ausgebildet. Sie dient zur Aufnahme einer Hartschaumstoffeinlage bzw. eines Hartschaumstoffkörpers, vorzugsweise Styropor®-Körpers, der als anatomisch ausgebildete Liege-/Sitzunterlage dient. Diese Einlage ist mit einem textilen Bezug oder einer Polsterauflage 11 versehen. Die Polsterauflage 11 weist randseitig einen Gummizug auf, mittels dem sie am Styropor®-Körper gehalten wird, nachdem der mit Gummizug versehene Rand der Polsterauflage über den Rand des Styropor®-Körpers gestülpt ist. In diesem Zustand ist die Polsterauflage in den Figuren 1 und 2 dargestellt. Unter der Polsterauflage 11 befindet sich der erwähnte Hartschaumstoffkörper. Dieser läßt sich samt Polsterauflage einfach aus der Kunststoffschale 2 entfernen bzw. herausnehmen, zum Beispiel für den Wechsel der Polsterauflage.

Am Kopfende 7 der Liege-/Sitzschale 2 ist noch eine zentrale Gurtverstelleinrichtung angeordnet. Diese ist mit der Bezugsziffer 12 angedeutet. Die Funktion und Vorteilhaftigkeit dieser Gurtverstelleinrichtung ist eingangs erwähnt.

Der Figur 3 läßt sich entnehmen, daß der Kindersitz mit einem flexiblen Regen- und/oder Sonnendach sowie einer flexiblen Abdeckung ausgerüstet sein kann. Das erwähnte Regen- und/oder Sonnendach ist mit der Bezugsziffer 13 gekennzeichnet, während die übrige Abdeckung die Bezugsziffer 14 aufweist. Das Regen-und/oder Sonnendach 13 ist am Tragebügel 5 einerseits und am kopfseitigen Rand 15 der Liege-/Sitzschale 2 andererseits befestigt, insbesondere durch komplementäre Klettverschlußstreifen. Konkret ist der dem kopfseitigen Rand 15 der Liege-/Sitzschale 2 zugeordnete Rand des Regen- und/oder Sonnendachs 13 mit einem Gummizug 16 versehen, um den Rand des Daches 13 am zugeordneten kopfseitigen Schalenrand 15 festzuhalten.

Die fußseitige Hälfte des Kindersitzes 1 ist - wie erwähnt - durch eine wasserundurchlässige Folie bzw. Abdeckung 14 abgedeckt. Die Befestigung dieser Abdeckung erfolgt mittels Klettverschlüssen, von denen die schalenseitigen Klettverschlüsse in Figur 1 mit der Bezugsziffer 17 gekennzeichnet sind.

Es sei noch darauf hingewiesen, daß die dargestellte Liege-/Sitzschale 2 an der Unterseite 2 bogenförmige Kufen 18 aufweist, so daß der Kindersitz beim Abstellen auf einer ebenen Unterlage schaukelbar ist.

Die Verbindung zwischen dem erwähnten Sperrschieber und Druckknopf 10 erfolgt über einen sogenannten Bowdenzug, der sich innerhalb des Haltegriffs 8 und Tragbügels 5 erstreckt. Auch hier handelt es sich um eine an sich bekannte Technik, die hier speziell zur Anwendung kommt. Grundsätzlich wäre es auch denkbar, die Betätigungselemente für die Ent- und Verriegelung des Feststellmechanismus für den Tragebügel 5 im Bereich der Schwenkachse bzw. Anlenkung des Tragebügels 5 anzuordnen. Die dargestellte Ausführungsform ist jedoch besonders benutzerfreundlich, da sie eine Einhand-Bedienung erlaubt.

Alternativ zu der beschriebenen Regen- und/oder Sonnendach-Ausführung ist es auch denkbar, daß ein flexibles Regen-und/oder Sonnendach ausschließlich am kopfseitigen Rand 15 der Liege-/Sitzschale 2 befestigbar ist, und zwar vorzugsweise durch einen sich über den kopfseitigen Rand der Liege-/Sitzschale 2 spannbaren Gummizug gehalten ist, wobei das Regen-und/oder Sonnendach sich im montierten Zustand quer über die Liege-/Sitzschale 2 erstreckend Stäbe umfaßt, die das Dach unterhalb des Tragebügels 5 nach oben gewölbt halten. Es handelt sich dabei um flexible Stäbe, wie sie auch bei Regenschirmen zur Anwendung kommen. Diese Stäbe können aus Metall oder vorzugsweise Kunststoff bestehen und sind im Dachbezug eingenäht. Die Fixierung des Regen- und/oder Sonnendachs an der Sitzschale oder an der dort befestigten Polsterung erfolgt mittels am vorderen unteren Ende des Regen-und/oder Sonnendachs angeordneten Druckknöpfen, Klettbändern oder dergleichen.

Zwischen dem vorderen Rand des Regen- und/oder Sonnendachs einerseits und dem fußseitigen Rand der Liege-/Sitzschale 2 andererseits kann eine transparente Folie als Wind- und Regenschutz aufspannbar sein. Die Befestigung am fußseitigen Rand der Liege-/Sitzschale 2 erfolgt wiederum vorzugsweise durch einen Gummizug. Zur Befestigung am vorderen Rand des Regen- und/oder Sonnendachs dient vorzugsweise ein Reißverschluß.

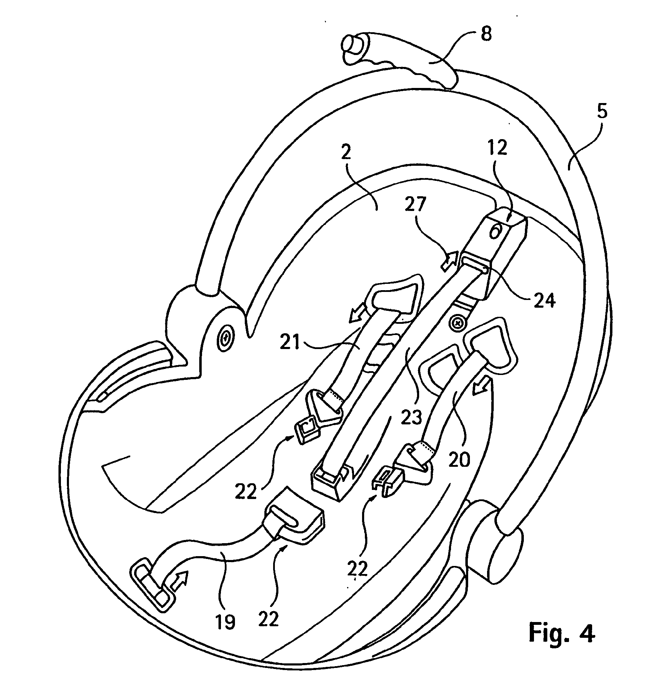

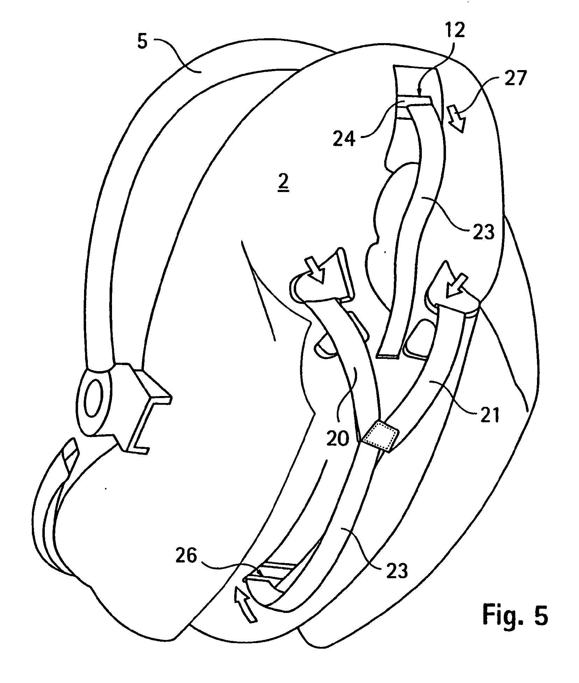

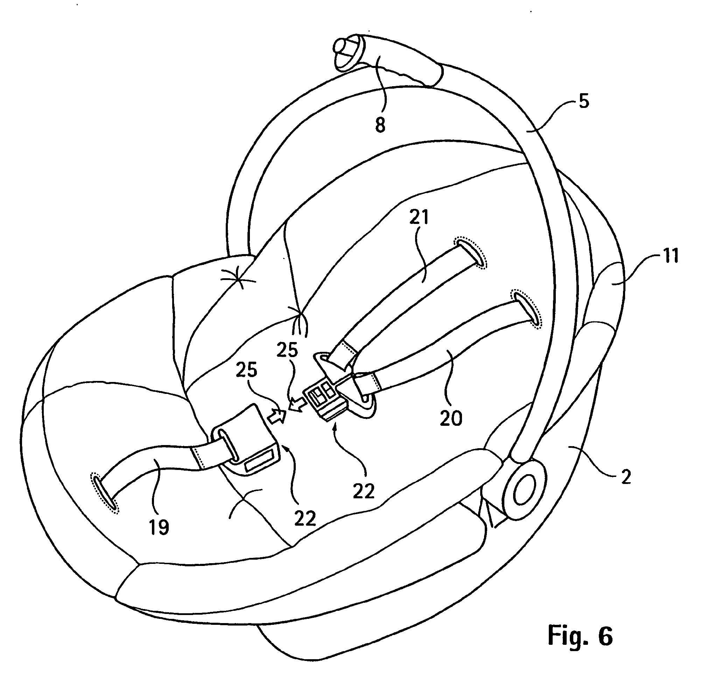

Anhand der Figuren 4-6 soll noch eine besonders vorteilhafte Sicherheitsgurteinrichtung beschrieben werden, für die auch unabhängig von den vorgenannten Merkmalen des beschriebenen Kindersitzes Schutz beansprucht wird. Die dargestellte Sicherheitsgurteinrichtung umfaßt einen am fußseitigen Ende der Liege-/Sitzschale 2 etwa mittig befestigten und sich beim Gebrauch zwischen den Beinen eines sich im Kindersitz befindenden Kleinkindes erstreckenden Zentralgurt 19, zwei sich durch die Liege-/Sitzschale 2 von hinten nach vorne hindurch über die beiden Schultern des Kleinkindes erstreckende Schultergurte 20, 21, die über einen gemeinsamen Steckverschluß 22 etwa Y-artig mit dem Zentralgurt 19 verbindbar sind (siehe Pfeile 25 in Figur 6), und ferner einen Verstellgurt 23 umfaßt, der an der Rückseite der Liege-/Sitzschale 2 mit den beiden Schultergurten 20, 21 verbunden und durch eine fußseitig in der Liege-/Sitzschale 2 angeordnete Umlenköffnung 26 hindurch zu einer kopfseitig angeordneten zentralen Gurtverstelleinrichtung 12 geführt ist. Die zentrale Gurtverstelleinrichtung 12 umfaßt wiederum eine Öffnung 24 für den Verstellgurt 23, so daß dieser von der Vorderseite zur Rückseite der Liege-/Sitzschale 2 geführt werden kann. In dieser Durchgangsöffnung 24 ist eine Gurtverriegelung derart wirksam, daß der Verstellgurt 23 zwar in Richtung des Pfeiles 27 anziehbar, aber ohne aktive Entriegelung eines Verriegelungsmechanismus, der im einzelnen nicht näher dargestellt ist, nicht zurückziehbar und damit lockerbar ist. Der Benutzer des beschriebenen und dargestellten Sicherheitsgurtsystems braucht nach dem Verschließen von Zentralgurt 19 und den Schultergurten 20, 21 nur noch an dem Endabschnitt des Verstellgurts 23 an der Rückseite des Kindersitzes bzw. der Schale 2 desselben in Richtung des Pfeiles 27 anzuziehen. Damit werden die beiden Schultergurte 20, 21 und natürlich auch der Zentralgurt 19 straff gezogen. Nach Entriegelung des Verriegelungsmechanismus lassen sich sämtliche Gurte auch wieder zentral lockern.

Die Gurtverriegelung, die im einzelnen nicht näher dargestellt ist, funktioniert bei einer bevorzugten Ausführungsform ähnlich wie eine sogenannte "Curry"-Klemme, wie sie aus dem Segelsport bekannt ist.

### Bezugszeichenliste

- 1: Kindersitz
- 2: Liege-/Sitzschale
- 3: Seitenwand
- 4: Seitenwand
- 5: Tragbügel
- 6: Pfeil
- 7: kopfseitiges Ende
- 8: Haltegriff
- 9: Schwenkachse
- 10: Druckknopf
- 11: Polsterauflage
- 12: Gurtverstelleinrichtung
- 13: Regen- und/oder Sonnendach
- 14: Abdeckung
- 15: kopfseitiger Rand
- 16: Gummizug
- 17: Klettverschlußstreifen
- 18: Kufen
- 19: Zentralgurt
- 20: Schultergurt
- 21: Schultergurt
- 22: Verschluß
- 23: Verstellgurt
- 24: Durchgangsöffnung
- 25: Pfeil
- 26: Umlenköffnung
- 27: Pfeil

## Patentansprüche

1. Kindersitz, insbesondere Autokindersitz für Babys und Kleinstkinder, mit einer Liege-/Sitzschale (2) und mit einem an der Liege-/Sitzschale um eine sich quer und etwa horizontal erstreckende Achse (9) verschwenkbaren Tragebügel (5), welcher einen sich in etwa senkrecht zu dessen Schwenkachse (9) erstreckenden Haltegriff (8) umfasst, wobei die Anlenkung des Tragebügels (5) an der Liege-/Sitzschale (2), insbesondere an deren Seitenwänden (3, 4) einen Feststellmechanismus mit Sperrschieber und zugeordneten Rastausnehmungen umfasst, so dass der Tragebügel (5) entweder in aufrechter Tragestellung oder in heruntergeklappter Transportstellung arretierbar ist, **dadurch gekennzeichnet, dass** der oder die Sperrschieber dem Tragebügel (5) mit Haltegriff (8) zugeordnet ist bzw. sind und mittels eines am Haltegriff (8) vorstehenden Druckknopfes (10) entgegen der Wirkung eines elastischen Elements, insbesondere einer Feder aus einer Sperrstellung heraus in eine Freigabestellung bewegbar ist bzw. sind, in der dann der Tragebügel (5) frei verschwenkbar ist.

2. Kindersitz nach Anspruch 1, **dadurch gekennzeichnet, dass** die dem oder den Sperrschieber(n) zugeordneten Rastausnehmungen am Außenumfang einer der Schwenkachse (9) zugeordneten, ortsfest an der Liege-/Sitzschale (2) montierten Scheibe ausgebildet sind.

3. Kindersitz nach Anspruch 1 oder 2, **dadurch gekennzeichnet, dass** der Haltegriff (8) etwa im Zenit des Tragebügels (5) an diesen angesetzt ist und sich in Tragestellung desselben entweder nach hinten oder vorzugsweise nach vorne erstreckt, so dass er sich etwa über dem Schwerpunkt von Liege-/Sitzschale (2) samt Baby oder Kind befindet.

4. Kindersitz nach einem der Ansprüche 1-3, **dadurch gekennzeichnet, dass** die Liege-/Sitzschale (2) als einteilige Kunststoffschale ausgebildet ist und eine Art Schaumstoffeinlage bzw. einen Hartschaustoffkörper aufnimmt, die bzw. der als anatomische Liege-/Sitzunterlage dient.

5. Kindersitz nach Anspruch 4, **dadurch gekennzeichnet, dass** der Hartschaumstoffkörper mit einem textilen Bezug oder einer Polsterauflage (11) versehen ist.

6. Kindersitz nach Anspruch 5, **dadurch gekennzeichnet, dass** der textile Bezug oder die Polsterauflage (11) randseitig mit einem Gummizug versehen ist, mittels dem der Bezug bzw. die Polsterauflage (11), nachdem sie über den Rand des Hartschaumstoffkörpers gestülpt ist, an diesem gehalten wird.

7. Kindersitz, insbesondere nach einem der Ansprüche 1-6, **dadurch gekennzeichnet, dass** am Kopfende (7) der Liege-/Sitzschale (2) eine zentrale Gurtverstelleinrichtung (12) angeordnet ist.

8. Kindersitz nach einem der Ansprüche 1-7, **dadurch gekennzeichnet, dass** ein flexibles Regen- und/oder Sonnendach (13) am Tragebügel (5) einerseits und am kopfseitigen Rand (15) der Liege-/Sitzschale (2) andererseits befestigbar ist, insbesondere durch komplementäre Klettverschlussstreifen, Druckknöpfe, Bändchen oder dgl., so dass mittels des Tragebügels (5) das Regen- und/oder Sonnendach (13) je nach Bedarf aufspannbar oder zusammenfaltbar ist.

9. Kindersitz nach Anspruch 8, **dadurch gekennzeichnet, dass** der dem kopfseitigen Rand (15) der Liege-/Sitzschale (2) zugeordnete Rand des Regen- und/oder Sonnendachs (13) einen Gummizug (16) umfasst, der dazu dient, den Rand des Daches (13) am zugeordneten Schalenrand (15) festzuhaltern,

10. Kindersitz nach einem der Ansprüche 1-9, **dadurch gekennzeichnet, dass** die fußseitige Hälfte des Kindersitzes (1) durch eine wasserundurchlässige Folie oder dgl. Abdeckung (14) abdeckbar ist.

11. Kindersitz nach Anspruch 7 oder nach einem oder mehreren der folgenden, auf Anspruch 7 unmittelbar oder mittelbar rückbezogenen Ansprüche, **dadurch gekennzeichnet, dass** eine Sicherheitsgurteinrichtung vorgesehen ist, die einen am fußseitigen Ende der Liege-/Sitzschale (2) etwa mittig befestigten, sich beim Gebrauch zwischen den Beinen eines sich im Kindersitz befindenden Kleinkindes erstreckenden Zentralgurt (19), zwei sich durch die Liege-/Sitzschale (2) von hinten nach vorne hindurch über die beiden Schultern des Kleinkindes legbare Schultergurte (20, 21), die über einen gemeinsamen Verschluss (22) Y-artig mit dem Zentralgurt (19) verbindbar sind, und ferner einen Verstellgurt (23) umfasst, der an der Rückseite der Liege-/Sitzschale (2) mit den beiden Schultergurten (20, 21) verbunden und durch eine fußseitig an oder in der Liege-/Sitzschale (2) angeordnete Umlenköffnung (26) hindurch zu der kopfseitig angeordneten zentralen Gurtverstelleinrichtung (12) geführt ist.

12. Kindersitz nach Anspruch 11, **dadurch gekennzeichnet, dass** die zentrale Gurtverstelleinrichtung (12) eine Durchgangsöffnung (24) für den Verstellgurt (23) aufweist, in der eine Gurtverriegelung derart wirksam ist, dass der Verstellgurt (23) zwar abziehbar, aber ohne aktive Entriegelung nicht zurückziehbar und damit lockerbar ist.

13. Kindersitz nach einem der Ansprüche 1-7, **dadurch gekennzeichnet, dass** ein flexibles Regen- oder Sonnendach am kopfseitigen Rand (15) der Liege-/Sitzschale (2) befestigbar ist, insbesondere durch einen über den kopfseitigen Rand der Liege-/Sitzschale (2) spannbaren Gummizug gehalten ist, wobei das Regen- und/oder Sonnendach sich im montierten Zustand quer über die Liege-/Sitzschale (2) erstreckende Flexelemente, insbesondere flexible Stäbe, umfasst, die das Dach unterhalb des Tragebügels (5) nach oben gewölbt halten.

14. Kindersitz nach Anspruch 13, **dadurch gekennzeichnet, dass** zwischen dem vorderen Rand des Regen- und/oder Sonnendachs einerseits und dem fußseitigen Rand der Liege-/Sitzschale (2) andererseits eine transparente Folie als Wind- und/oder Regenschutz aufspannbar ist.

## Claims

1. Child safety seat, in particular child car seat for babies and infants, with a lying/sitting hull (2) and with a carrying bow (5) swivelling around an axis (9) extending crosswise and approximately horizontally, a carrying bow which embraces a supporting strap (8) extending approximately vertically to the swivelling axis (9) of the former, the couple of the carrying bow (5) embracing a fixing device with sliding stopper and assigned locking grooves located on the lying/sitting hull (2), in particular on its side walls (3, 4), so that the carrying bow (5) can be arrested either in its vertical position for carrying or in hinged-down position for transport purposes, **characterized by** the fact that the sliding stopper(s) is/are assigned to the carrying bow (5) with supporting strap (8) and by means of a push-button (10) jutting out on the supporting strap (8) can freely be moved, against the action of an elastic element-, in particular a spring, out of the blocking position into the release position, in which the carrying bow (5) can swivel freely.

2. Child safety seat following claim 1, **characterized by** the fact that the locking grooves assigned to the sliding stoppers are formed on a the outer perimeter of a disk mounted firmly on the lying/sitting hull (2) and assigned to the swivelling axis (9) .

3. Child safety seat following claims 1 or 2, **characterized by** the fact that the supporting strap (8) is mounted onto the carrying bow (5) approximately in its zenith and, with the bow in the carrying position, extends either to the rear or preferably to the front, so that is located approximately above the centre of gravity of the lying/sitting hull (2) with the baby or infant in the seat.

4. Child safety seat following one of the claims 1-3, **characterized by** the fact that the lying/sitting hull (2) is formed as one-piece plastic hull and contains a sort of foamed material insert or rigid expanded polyurethane body which serves as anatomic support for lying or sitting.

5. Child safety seat following claim 4, **characterized by** the fact that the rigid expanded polyurethane body is provided with a textile cover or an upholstered support (11).

6. Child safety seat following claim 5, **characterized by** the fact that the textile cover or the upholstered support (11) is provided with a rubber traction string on its edge by means of which the cover or the upholstered support (11), respectively, is hold by the rigid expanded polyurethane body after it has been put over its edge.

7. Child safety seat, in particular following one of the claims 1-6, **characterized by** the fact that a central belt adjusting device (12) is mounted at the head end (7) of the lying/sitting hull (2).

8. Child safety seat following one of the claims 1-7, **characterized by** the fact that a flexible canvas blind (13) can be fixed on the carrying bow (5) on the one hand and on the head side edge (15) of the lying/sitting hull (2) on the other hand, in particular by means of complementary Velcro fastener strips, push buttons, strings, or the like, so that the canvas blind can be expanded or folded up by means of the carrying bow (6), as required.

9. Child safety seat following claim 8, **characterized by** the fact that the edge of the canvas blind (13) adjacent to the head side edge (15) of the lying/sitting hull (2) includes a rubber traction string (16) which serves for fixing the edge of the blind (13) on the adjacent edge of the hull (15).

10. Child safety seat following one of the claims 1-9, **characterized by** the fact that the foot half of the child safety seat (1) can be covered by a waterproof foil or equivalent cover (14).

11. Child safety seat following claim 7 or one of the following claims directly or indirectly referring to claim 7, **characterized by** the fact that a safety belt installation is provided that includes a central belt (19) fixed approximately in the centre of the food end of the lying/sitting hull (2) which, when used, extends between the legs of the infant in the child seat, two shoulder belts (20, 21) that can be put over the child's shoulders from the rear to the front which, via a common lock (22), can be connected to the central belt (19) in Y form, in addition, the seat includes an adjusting belt (23) which on the back of the lying/sitting hull (2) is connected to both of the shoulder belts (20, 21) and via a deflection opening (26) located on or in the foot end of the lying/sitting hull (2) is guided to the central belt adjusting device (12) mounted on the head side of the seat.

12. Child safety seat following claim 11, **characterized by** the fact that the central belt adjusting device (12) has a clearance (24) for the adjusting belt (23) in which a belt lock acts in such a manner that the adjusting belt (23) can be pulled off, however, cannot be retracted, thus released if the lock is not released.

13. Child safety seat following one of the claims 1-7, **characterized by** the fact that a flexible canvas blind can be fixed on the head side edge (15) of the lying/sitting hull (2), which in particular is held by means of a rubber traction string which can be stretched over the head side edge of the lying/sitting hull (2), the canvas blind including flexible elements, in particular flexible rods, which in its mounted position extend crosswise above the lying/sitting hull (2) and keep the blind vaulted to the upper side beneath the carrying bow (5).

14. Child safety seat following claim 13, **characterized by** the fact that between the front edge of the canvas blind on the one hand, and the foot side edge of the lying/sitting hull (2) on the other hand a transparent foil can be extended as wind and/or rain shield.

## Revendications

1. Siège de sécurité pour enfants, notamment siège de sécurité de voiture pour bébés et petits enfants, avec une coque-couchette/coque-siège (2) et avec un archet porteur (5) tournant autour d'un pivot transversal et environ horizontal qui comprend un poignée-barre (8) s'étendant perpendiculairement sur le pivot de l'archet porteur (5), l'articulation de l'archet porteur (5) sur la coque-couchette/coque-siège (2), notamment sur ses parois (3, 4), comprenant un mécanisme de blocage avec coulisseau de blocage et les creux de verrouillage correspondants, de manière que l'archet porteur peut être arrêté en position verticale pour porter la siège ou bien rabattu en position de transport, **caractérisé par le fait que** le(s) coulisseau (x) de blocage est/sont attribué(s) à l'archet porteur (5) avec le poignée-barre (8) et moyennant un bouton de pression (10) débordant du poignée-barre (8) peut/peuvent être mû/mus contrairement à l'effet d'un élément élastique, notamment d'un ressort, d'une position d'arrêt dans une position de déblocage où l'archet porteur (5) peut être tourné librement.

2. Siège de sécurité pour enfants selon la revendication 1, **caractérisée par le fait que** les creux de verrouillage correspondants au(x) coulisseau(x) de blocage sont formés sur le périmètre extérieur d'une disque montée fermement sur la coque-couchette/coque-siège (2) et correspondante au pivot (9).

3. Siège de sécurité pour enfants selon la revendication 1 ou 2, **caractérisée par le fait que** le poignée-barre (8) est monté à l'archet porteur (5) environ dans son zénith et, quand celui-ci se trouve dans la position où la siège peut être portée s'étend en arrière ou bien, de préférence, en avant, de manière qu'il se trouve environ au-dessus d centre de gravité de la coque-couchette/coque-siège (2) logeant le bébé ou l'enfant.

4. Siège de sécurité pour enfants selon une des revendications 1-3, **caractérisée par le fait que** la coque-couchette/coque-siège (2) est formée comme une seule coque de plastic logeant une sorte de insertion d'un produit alvéolaire ou bien un corps de mousse de polyuréthane rigide qui sert comme appui anatomique pour coucher ou être assis.

5. Siège de sécurité pour enfants selon la revendication 4, **caractérisée par le fait que** le corps de mousse de polyuréthane rigide est muni d'un revêtement textile ou un bourrelet (11).

6. Siège de sécurité pour enfants selon la revendication 5, **caractérisée par le fait que** le revêtement textile ou le bourrelet (11) est muni d'un cordon de tirage en caoutchouc sur ses bords moyennant lequel le revêtement ou bien le bourrelet (11) est tenu ferme sur le corps de mousse de polyuréthane rigide après avoir été retroussé sur les bords du corps.

7. Siège de sécurité pour enfants, notamment selon une des revendications 1-6, **caractérisée par le fait qu'**un dispositif central de réglage des ceintures (12) est arrangé sur la tête (7) de la coque-couchette/coque-siège (2).

8. Siège de sécurité pour enfants selon une des revendications 1-7, **caractérisée par le fait qu'**un baldaquin flexible (13) peut être fixé sur l'archet porteur (5) d'une part et sur le bord de la tête (15) de la coque-couchette/coque-siège (2) d'autre part, notamment moyennant des rubans complémentaires de fermeture Velcro, des boutons de pression, des petites cordons ou pareil, de manière que le baldaquin (13) peut être étendu ou replié moyennant l'archet porteur (5) suivant les besoins.

9. Siège de sécurité pour enfants selon la revendication 8, **caractérisée par le fait que** le bord du baldaquin (13) correspondant au bord de la tête (15) de la coque-couchette/coque-siège (2) comprend un cordon de tirage en caoutchouc (16) qui sert à tenir le bord du baldaquin (13) sur le bord correspondant du coque (15).

10. Siège de sécurité pour enfants selon une des revendications 1-9, **caractérisée par le fait que** la moitié de la siège (1) au pied peut être recouvert par une feuille imperméable ou un revêtement pareil.

11. Siège de sécurité pour enfants selon la revendication 7 ou une ou plusieurs des revendications suivantes se référant directement ou indirectement à la revendication 7, **caractérisée par le fait que** un dispositif de ceinture de sécurité est prévu qui au pied de la coque-couchette/coque-siège (2) a une ceinture centrale (19) fixée au milieu, pendant l'emploi se trouvant entre les jambes de l'enfant assis dans la siège de sécurité, deux ceintures d'épaule (20, 21) qui sont mises au travers de la coque-couchette/coque-siège (2) de l'arrière en avant sur les épaules de l'enfant qui parmi une fermeture commune peuvent être reliées à la ceinture centrale (19) en forme de Y, en outre a une ceinture de réglage (23) qui au dos de la coque-couchette/coque-siège (2) est reliée aux deux ceintures d'épaule (20, 21) et au travers d'une ouverture de renvoi (26) arrangée dans la coque-couchette/coque-siège (2) est conduite vers le dispositif central de réglage de ceintures (12).

12. Siège de sécurité pour enfants selon la revendication 11, **caractérisée par le fait que** dispositif central de réglage des ceintures (12) a un trou de passage (24) pour la ceinture de réglage (23), dans lequel un blocage de ceinture est actif de manière que la ceinture de réglage (23) peut bien être enlevée, mais sans déblocage actif ne peut être retirée, donc relâchée.

13. Siège de sécurité pour enfants selon une des revendications 1-7, **caractérisée par le fait qu'**un baldaquin flexible peut être fixé au bord de la tête (15) de la coque-couchette/coque-siège (2), notamment moyennant un cordon de tirage en caoutchouc qui peut être tendu sur le bord de la tête de la coque-couchette/coque-siège (2), le baldaquin comprenant des éléments flexibles, notamment des bâtons flexibles, qui dans leur position étiré s'étendent au travers de la coque-couchette/coque-siège (2), des éléments qui tiennent le baldaquin envoûté en haut au-dessous de l'archet porteur.

14. Siège de sécurité pour enfants selon la revendication 13, **caractérisée par le fait qu'**entre le bord avant du baldaquin d'une part et le bord du pied de la coque-couchette/coque-siège (2) une feuille transparente peut être étirée comme abri contre le vent ou contre la pluie.
